# EUROPEAN PATENT APPLICATION

(11) **EP 3 992 906 A1**
(43) Date of publication of application: **04.05.2022**
(21) Application number: 20832753.6
(22) Date of filing: 03.04.2020
(51) Int. Cl.: G06T 7/00

(54) **INFORMATION PROCESSING METHOD AND INFORMATION PROCESSING SYSTEM**

(30) Priority: 25.06.2019 JP 2019117224
(71) Applicant: Panasonic Intellectual Property Management Co., Ltd., Osaka-shi, Osaka 540-6207 (JP)
(72) Inventor: TAKAHASHI, Masaki, Osaka-shi, Osaka 540-6207 (JP); ISHIKAWA, Kazunobu, Osaka-shi, Osaka 540-6207 (JP); TSUKAMOTO, Yusuke, Osaka-shi, Osaka 540-6207 (JP); ISHII, Yasunori, Osaka-shi, Osaka 540-6207 (JP)
(74) Representative: Vigand, Philippe
(86) International application number: PCT/JP2020/015401
(87) International publication number: WO 2020/261700

(57) **Abstract**

An information processing method is executed by a computer and includes acquiring a first recognition result that is output as a result of inputting sensing data to a first recognition model trained through machine learning (S10), acquiring reference data for the sensing data (S20), determining a difference in class of a recognition target between the first recognition result and the reference data (S30), generating an additional class for the first recognition model when the difference satisfies a predetermined condition (Yes in S30) (S70), and outputting the sensing data or processed data obtained by processing the sensing data as training data for the additional class (S80).

## Description

### [Technical Field]

The present disclosure relates to an information processing method and an information processing system for class recognition processing using machine learning models.

### [Background Art]

Class classification devices using machine learning have been actively studied and commercialized in recent years.

For example, Patent Literature (PTL) 1 discloses a system and a method for detecting unknown classes and generating classifiers for the unknown classes.

### [Citation List]

### [Patent Literature]

[PTL 1]
Japanese Unexamined Patent Application Publication (Translation of PCT Application) No. 2018-528525

### [Summary of Invention]

### [Technical Problem]

According to the invention disclosed in PTL 1, however, if outputs of the classifiers have errors, improvements in performance of the classifiers through training may be suppressed. In contrast, it is an object of the present disclosure to provide an information processing method and an information processing system that allow efficient improvements in recognition performance of recognition models on the basis of errors in the recognition models including classifiers.

### [Solution to Problem]

An information processing method according to one aspect of the present disclosure is executed by a computer and includes acquiring a first recognition result that is output as a result of inputting sensing data to a first recognition model that is trained through machine learning, acquiring reference data for the sensing data, determining a difference in class of a recognition target between the first recognition result and the reference data, when the difference satisfies a predetermined condition, generating an additional class for the first recognition model, and outputting the sensing data or processed data obtained by processing the sensing data as training data for the additional class.

An information processing system according to one aspect of the present disclosure includes a first acquirer that acquires a first recognition result that is output as a result of inputting sensing data to a first recognition model trained through machine learning, a second acquirer that acquires reference data for the sensing data, a determiner that determines a difference in class of a recognition target between the first recognition result and the reference data, and a class adder that, when the difference satisfies a predetermined condition, generates an additional class for the first recognition model and outputs the sensing data or processed data obtained by processing the sensing data as training data for the additional class.

Note that these comprehensive or specific aspects may be implemented as systems, methods, integrated circuits, computer programs, or computer-readable recording media such as CD-ROMs, or may be implemented as any combination of systems, methods, integrated circuits, computer programs, and recording media.

### [Advantageous Effects of Invention]

The information processing method and the information processing system according to one aspect of the present disclosure efficiently improve recognition performance of recognition models on the basis of errors in the recognition models.

### [Brief Description of Drawings]

[FIG. 1]

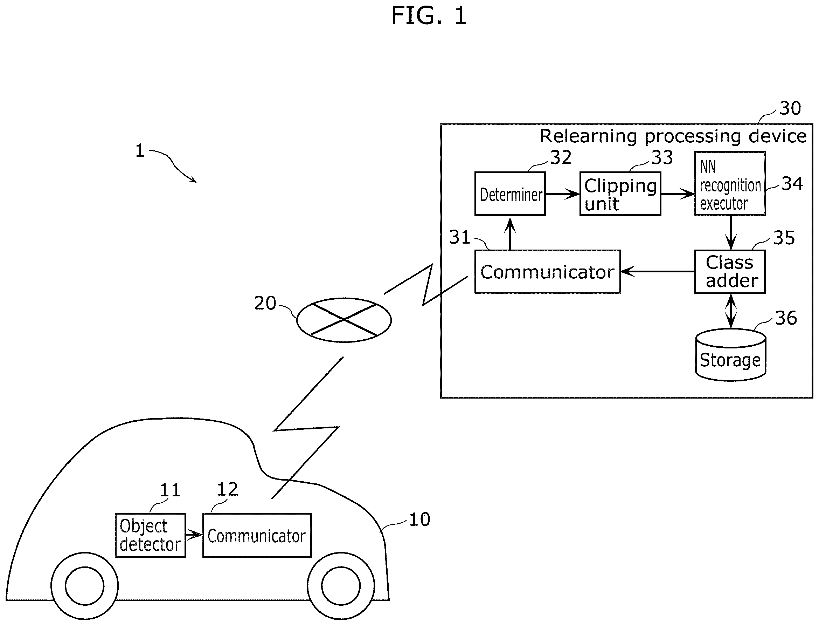

   FIG. 1 is a block diagram showing one example of a functional configuration of an information processing system according to an embodiment.
[FIG. 2]

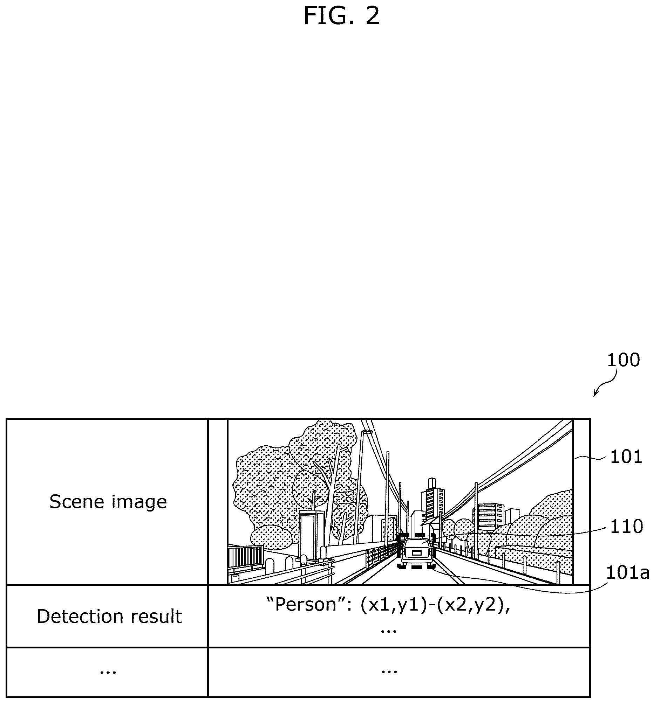

   FIG. 2 shows one example of log information that is output from a mobile unit according to the embodiment.
[FIG. 3]

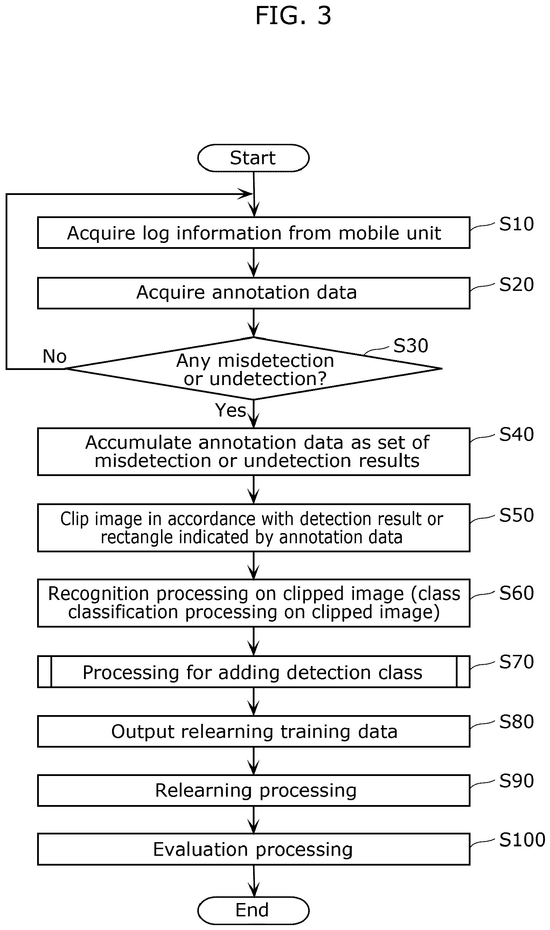

   FIG. 3 is a flowchart of operations of a relearning processing device according to the embodiment.
[FIG. 4A]

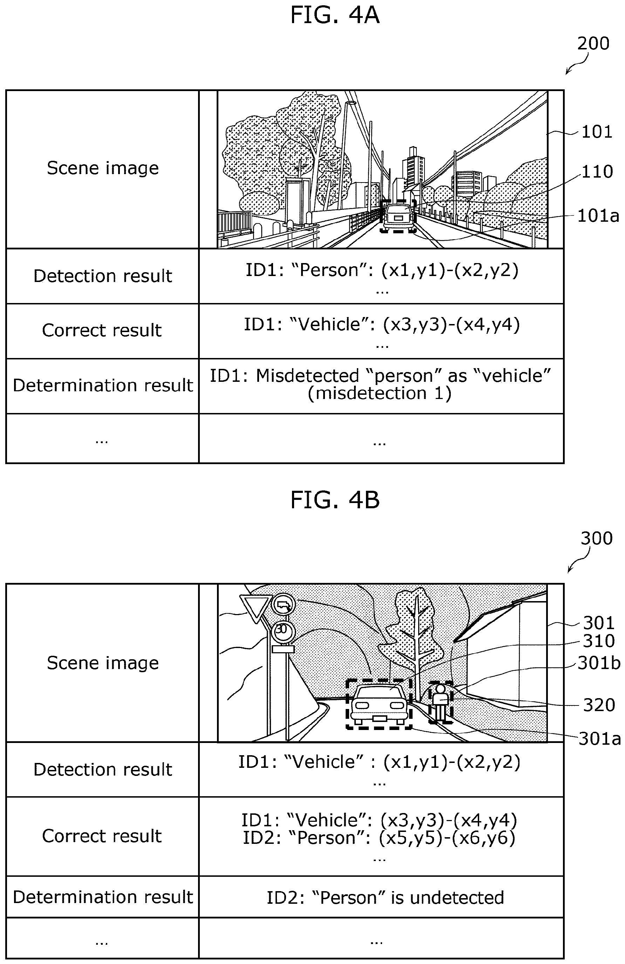

   FIG. 4A shows one example of determination information about misdetection according to the embodiment.
[FIG. 4B]
   FIG. 4B shows one example of determination information about undetection according to the embodiment.
[FIG. 5A]

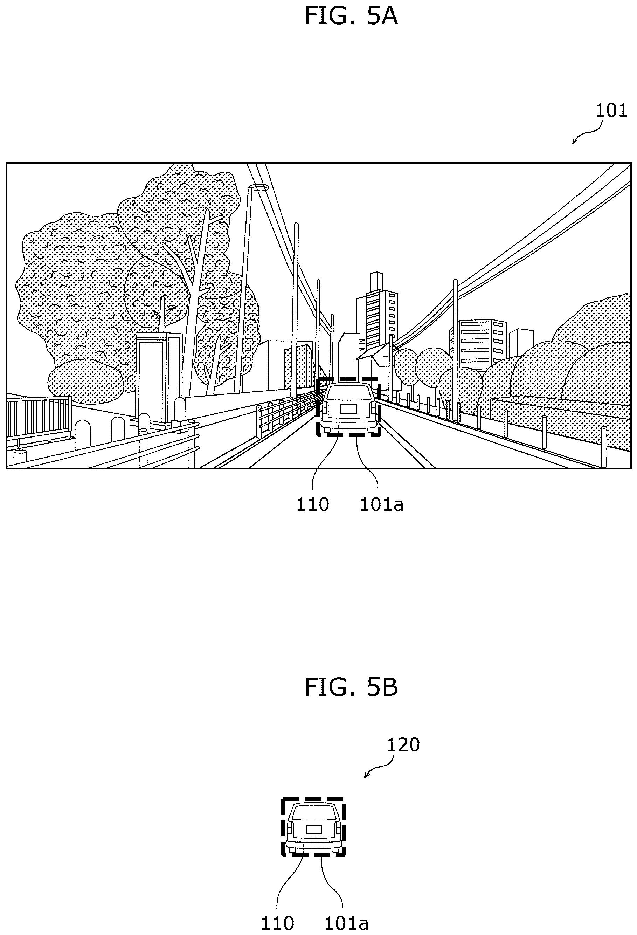

   FIG. 5A is an illustration of a misdetected scene image.
[FIG. 5B]
   FIG. 5B is an illustration of a clipped image clipped from the misdetected scene image.
[FIG. 6A]

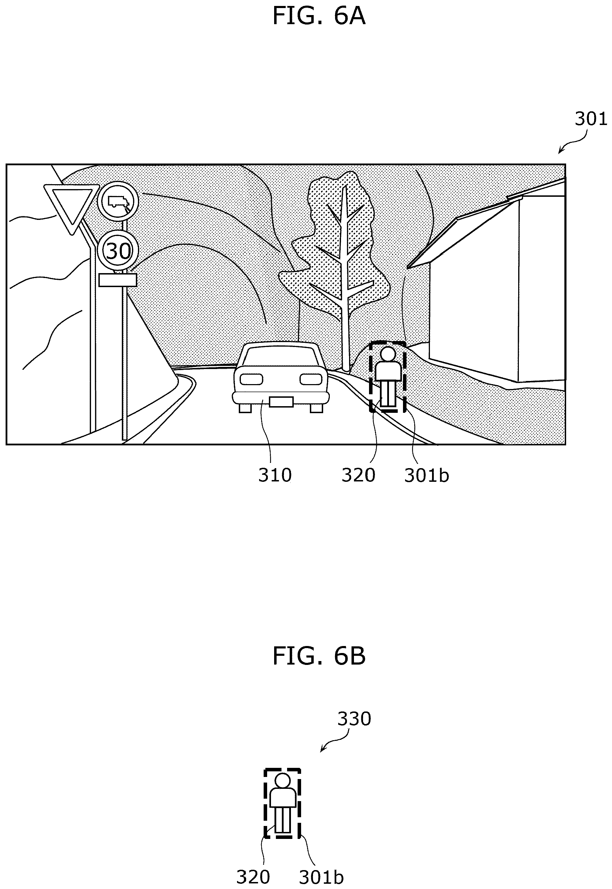

   FIG. 6A is an illustration of an undetected scene image.
[FIG. 6B]
   FIG. 6B is an illustration of a clipped image clipped from the undetected scene image.
[FIG. 7]

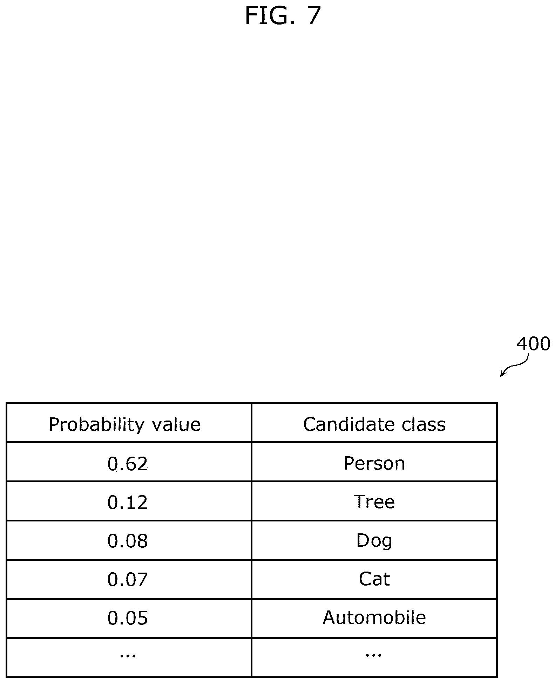

   FIG. 7 is an illustration of results of classification performed by an NN recognition executor according to the embodiment.
[FIG. 8]

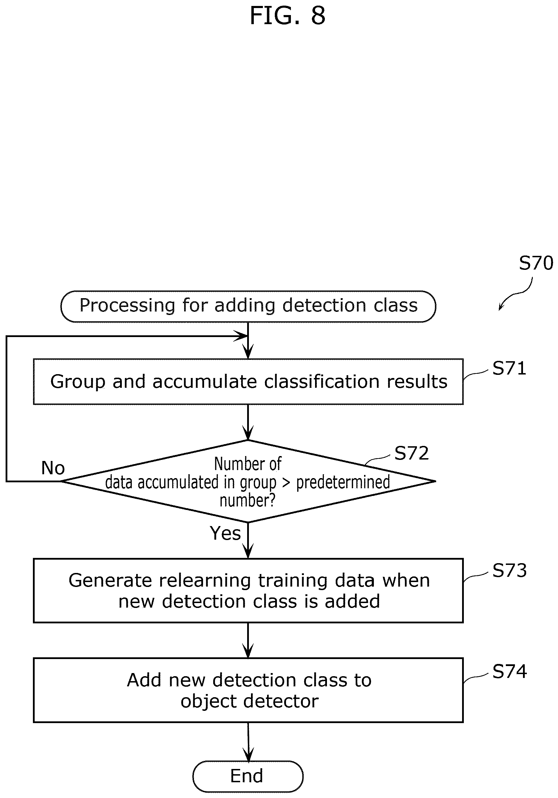

   FIG. 8 is a flowchart of processing for adding a detection class.
[FIG. 9]

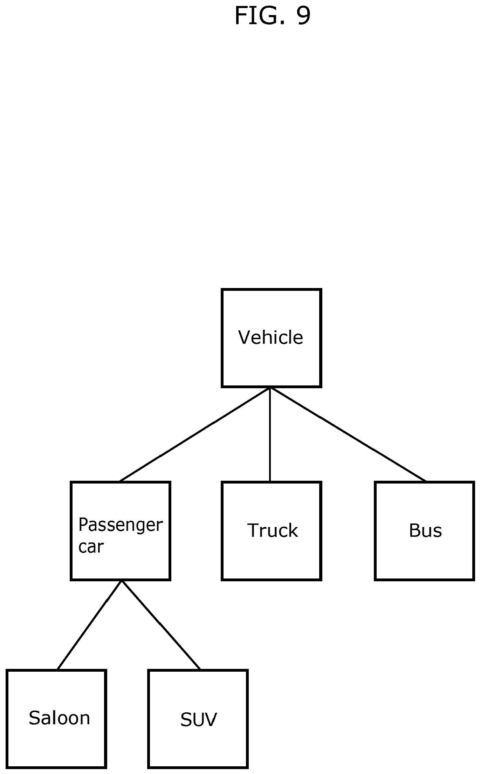

   FIG. 9 shows one example of a category structure for object detection.
[FIG. 10A]

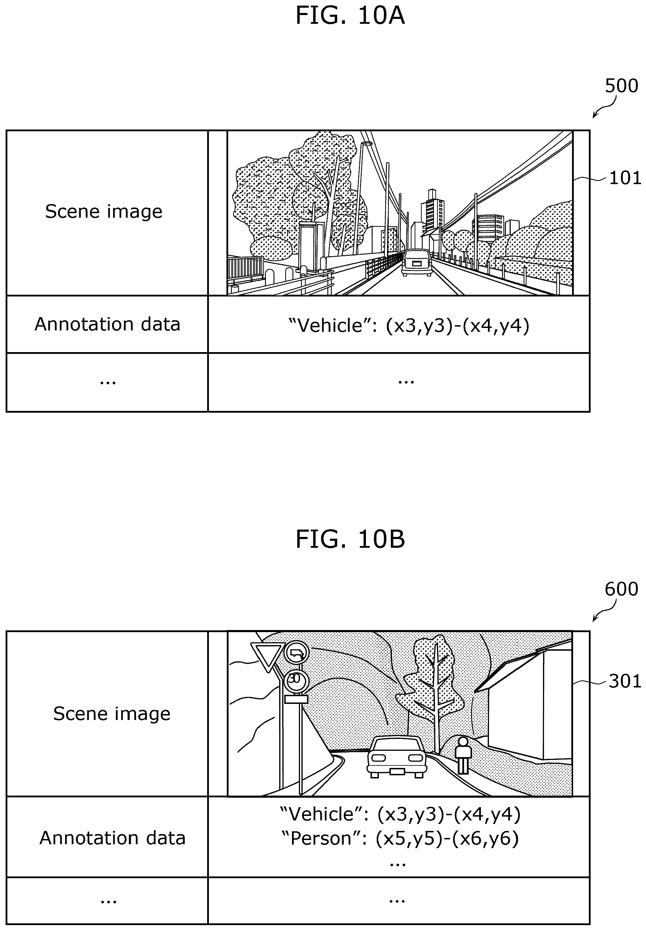

   FIG. 10A is an illustration of relearning training data for a misdetected scene image.
[FIG. 10B]
   FIG. 10B is an illustration of relearning training data for an undetected scene image.
[FIG. 11A]

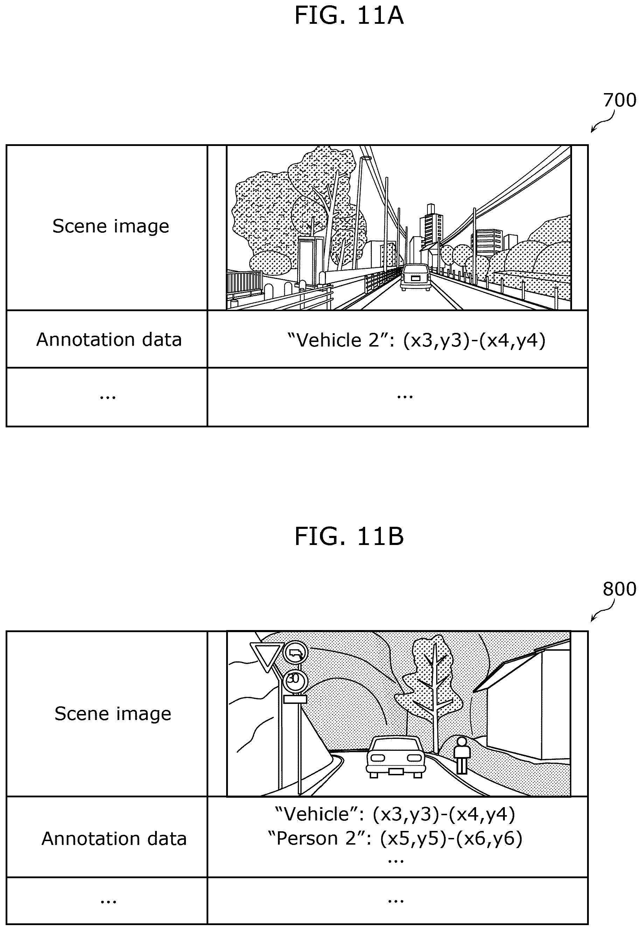

   FIG. 11A shows one example of relearning training data with modified annotation data.
[FIG. 11B]
   FIG. 11B shows another example of relearning training data with modified annotation data.
[FIG. 12]

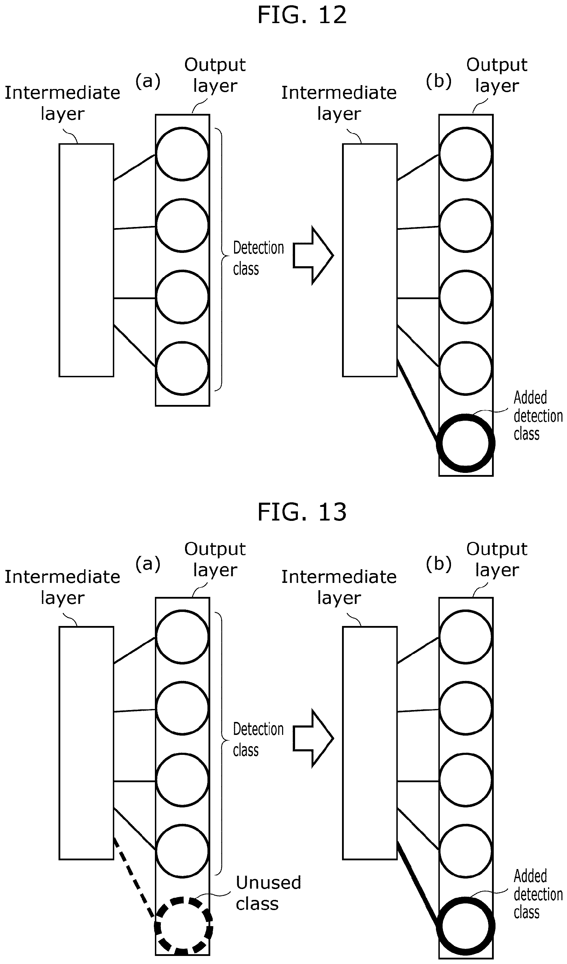

   FIG. 12 shows one example illustrating how a detection class is added for an object detector.
[FIG. 13]
   FIG. 13 shows another example illustrating how a detection class is added for the object detector.
[FIG. 14]

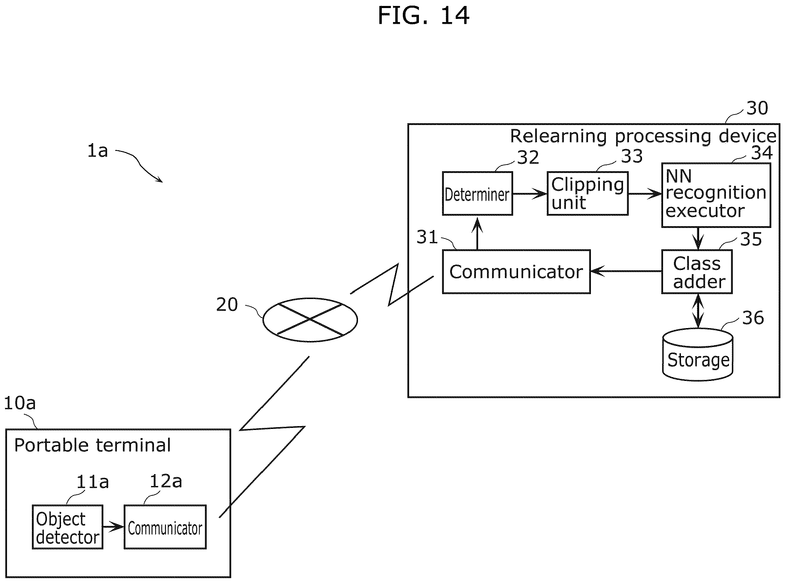

   FIG. 14 is a block diagram showing another example of the functional configuration of an information processing system according to another embodiment.

### [Description of Embodiments]

### [Underlying Knowledge Forming Basis of the Present Disclosure]

For example, in smartphones and autonomous vehicles (robot cars) operated by machines instead of drivers, ordinary object recognition devices (e.g., ordinary object detection devices) for images transferred from equipment such as camera devices and infrared array sensors are one of constituent functions. In the case of autonomous vehicles, ordinary objects are, for example, pedestrians, passenger cars, road signs, buildings, and road areas. It is an essential condition for autonomous vehicles to control their own bodies on the basis of recognition results obtained from ordinary object detection devices and to safely travel to intended places.

Therefore, accurate object recognition is required for the ordinary object detection devices, but there is no denying the possibility of occurrence of erroneous detection (e.g., misdetection or undetection). As a workaround for this case, a technique is presented in which misdetected image data and detection data are corrected properly, and the misdetected image data and the detection data are used as training data for relearning processing performed on the object detection devices. This processing has the effect of making similar misdetection less likely to occur in the object detection devices.

In the fields of various industrial goods including autonomous vehicles, products that are equipped with neural network-type recognition devices (neural network-type object detection devices) and that offer automatic damping on the basis of recognition results (detection results) obtained from the recognition devices have been introduced into the market. As examples of the technique of relearning processing for the neural network-type object recognition devices, transition learning and fine-tuning are present.

As another workaround, a technique is also considered in which an object that is difficult for a first object recognizer to properly recognize is separated as an object of another detection class, and a new second object recognizer (neutral network-type recognizer) is prepared that has undergone learning processing using training data that includes a scene image including an image of that object. Then, when the second object recognizer has recognized an object of that detection class, the recognized region is subjected to recognition processing performed by means other than the first object recognizer in order to consequently improve overall recognition performance.

However, the neural network-type object recognition devices require the collection of an enormous amount of image data and annotation operations in learning processing for coping with misdetection and undetection. The annotation operations are generally performed manually and entail considerable cost.

Accordingly, automation technology for creating various types of training data has been proposed. However, as a countermeasure against erroneous recognition (e.g., misdetection and undetection) made by object recognition devices, no consideration has been given to the idea of generating training data that includes addition of recognition classes and to design and technical solutions for relearning processing devices. PTL 1 also fails to provide such a description.

For example, no consideration is given to design and technical solutions for the function of adding a detection class to a neural network for object detection as a countermeasure against misdetection and undetection made by an ordinary object detection device and executing relearning processing to improve object detection performance of the ordinary object detection device.

In order to solve such problems, a portion of a detected image that is misdetected or undetected by an object detector (a portion including a misdetected or undetected object in the image) is clipped, and the clipped image is recognized using another neural network recognizer different from the object detector. Then, processing for generating a new detection class based on similarity indicated by consequent result information (e.g., the result of classification) and adding the detection class to the object detector targeted for relearning, and retraining processing is performed on the object detector. This improves detection performance of the object detector at low cost.

In view of this, the inventors of the present invention have eagerly considered generation of training data in order to efficiently take measures against misdetection and undetection made by an object detection device, and have invented an information processing method and an information processing system described below.

An information processing method according to one aspect of the present disclosure is executed by a computer and includes acquiring a first recognition result that is output as a result of inputting sensing data to a first recognition model that is trained through machine learning, acquiring reference data for the sensing data, determining a difference in class of a recognition target between the first recognition result and the reference data, when the difference satisfies a predetermined condition, generating an additional class for the first recognition model, and outputting the sensing data or processed data obtained by processing the sensing data as training data for the additional class.

Accordingly, when the difference satisfies the predetermined condition, the additional class for the first recognition model is generated. Then, the first recognition model, for which the additional class has been generated, is trained using, as training data, the sensing data or the processed data obtained by processing the sensing data for the case where the difference satisfies the predetermined condition. That is, the first recognition model is trained for the additional class based on an error in the recognition model. For example, when the way of the error in the recognition model has a feature, training is conducted for the new class based on the feature of the way of the error in order to more readily improve performance of recognizing the class that is originally present and that is difficult to learn for the recognition model. Accordingly, the information processing method according to one aspect of the present disclosure provides efficient improvements in recognition performance of the recognition model on the basis of the error in the recognition model.

For example, the information processing method may further include acquiring a second recognition result that is output as a result of inputting the sensing data to a second recognition model different from the first recognition model, and generating the additional class in accordance with the second recognition result.

Accordingly, the additional class for the first recognition model can be generated based on the second recognition result. When the second recognition model has higher recognition (detection) performance than the first recognition model, the second recognition result is more accurate than the first recognition result. Thus, an appropriate additional class can be generated if the additional class is generated based on the second recognition result. For example, the first recognition model can recognize, as an additional class, such a recognition target whose second recognition result is the result of recognition made by the second recognition model. That is, it is possible to improve the performance of detecting a recognition target whose recognition result is the second recognition result. Besides, the additional class can be generated automatically without requiring the user to perform any annotation operation on the sensing data. That is, it is possible to achieve the information processing method with improved convenience.

For example, the second recognition result includes one or more candidates for the class of the recognition target, and the additional class is generated based on the one or more candidates.

Accordingly, the additional class is generated based on the result of the output layer of the second recognition model. Thus, an appropriate additional class can be generated if the result of the output layer (one or more candidates) is used as a basis to generate the additional class. For example, the first recognition model can recognize, as an additional class, such a recognition target for which the result of recognition made by the second recognition model becomes one or more candidates. That is, it is possible to improve the performance of detecting a recognition target for which the recognition result includes the one or more candidates.

For example, the information processing method further includes acquiring a plurality of second recognition results from a plurality of sensing data, each of the plurality of second recognition results being the second recognition result, and each of the plurality of sensing data being the sensing data, and when at least part of the one or more candidates is the same or similar among the plurality of second recognition results, generating the additional class in accordance with the at least part of the one or more candidates.

Accordingly, the additional class is generated based on second recognition results that are the same or similar in tendency of the candidates for the class of the recognition target among the plurality of second recognition results. That is, it is possible to generate a more appropriate additional class. For example, the first recognition model can recognize, as an additional class, a recognition target for which the results of recognition made by the second recognition model are the same or similar in tendency. Accordingly, it is possible to further improve the detection performance of the object detection device.

For example, the information processing method further includes acquiring a plurality of second recognition results from a plurality of sensing data, each of the plurality of second recognition results being the second recognition result, and each of the plurality of sensing data being the sensing data, and when the one or more candidates are the same or similar in probability distribution among the plurality of second recognition results, generating the additional class in accordance with the probability distribution of the one or more candidates.

Accordingly, the additional class is generated based on second recognition results that are the same or similar in candidates for the class of the recognition target and in tendency of the probability distribution of the candidates among the plurality of second recognition results. That is, it is possible to generate a more appropriate additional class. For example, the first recognition model can recognize, as an additional class, a recognition target for which the results of recognition made by the second recognition model are the same or similar in tendency (e.g., tendency of the probability distribution). Accordingly, it is possible to further improve the detection performance of the object detection device in relearning.

For example, the second recognition result includes an intermediate product of the second recognition model, and the additional class is generated based on the intermediate product.

Accordingly, the additional class is generated based on the result of the intermediate layer of the second recognition model. Thus, an appropriate additional class can be generated if the result of the intermediate layer (intermediate product) is used as a basis to generate the additional class. For example, the first recognition model can recognize, as an additional class, a recognition target for which the second recognition result is a predetermined intermediate product. That is, it is possible to improve the performance of detecting the recognition target for which the second recognition result is a predetermined intermediate product.

For example, the information processing method further includes generating the additional class in accordance with the difference.

Since the additional class is generated based on the difference, it is possible to reduce throughput in the generation of the additional class.

For example, the first recognition model is a neural network model, and the generating of the additional class includes modifying a network configuration or a parameter of the neural network model.

Accordingly, the detection performance of the neural network model can be improved by modifying the network configuration (e.g. generating an additional class) or by modifying the parameter (e.g., modifying an anchor BOX). That is, it is possible to improve the detection performance of the neural network model without the need to prepare a new detector.

For example, the predetermined condition includes a condition that the first recognition result includes misdetection or undetection.

Accordingly, the additional class is generated when the first recognition result corresponds to either misdetection or undetection. When the first recognition model, for which the additional class has been generated, is subjected to relearning using training data that includes misdetected or undetected sensing data or processed data obtained by processing the sensing data, it is possible to effectively improve object detection performance of the first recognition model detecting a misdetected or undetected object.

An information processing system according to one aspect of the present disclosure includes a first acquirer that acquires a first recognition result that is output as a result of inputting sensing data to a first recognition model trained through machine learning, a second acquirer that acquires reference data for the sensing data, a determiner that determines a difference in class of a recognition target between the first recognition result and the reference data, and a class adder that, when the difference satisfies a predetermined condition, generates an additional class for the first recognition model and outputs the sensing data or processed data obtained by processing the sensing data as training data for the additional class.

This allows the computer to execute the above-described information processing method in accordance with a program.

Note that these comprehensive or specific aspects may be implemented as systems, devices, methods, integrated circuits, computer programs, or computer-readable recording media such as CD-ROMs, or may be implemented as any combination of systems, devices, methods, integrated circuits, computer programs, and recording media.

Embodiments of the present disclosure will be described hereinafter in detail with reference to the drawings. It is to be noted that each embodiment described below is a specific example of the present disclosure. Numerical values, shapes, constituent elements, steps, the order of steps, and so on described in the following embodiments are merely examples and do not intend to limit the scope of the present disclosure. Among the constituent elements described in the following embodiments, those that are not recited in any independent claim are described as arbitrary constituent elements. It is also possible to combine each content described in all of the embodiments.

Each figure is a schematic diagram and is not always illustrated in precise dimensions. Thus, for example, scale reduction or the like in figures may not always be the same. Substantially the same constituent elements are given the same reference signs throughout the drawings, and detailed description thereof shall be omitted or simplified.

In the specification of the present disclosure, terms indicating the relationship of elements such as being the same, terms indicating the shapes of elements such as a rectangle, and numerical values and the ranges of numerical values are not the expressions that represent only precise meaning, but are also the expressions that mean the inclusion of substantially equivalent ranges such as differences within ranges of several percent.

### [Embodiment]

An information processing method and an information processing system according to the present embodiment will be described hereinafter with reference to FIGS. 1 to 13.

### [1. Configuration of Information Processing System]

First, a configuration of information processing system 1 that includes relearning processing device 30 according to the present embodiment will be described with reference to FIG. 1. FIG. 1 is a block diagram illustrating a functional configuration of information processing system 1 according to the present embodiment. The following description provides an example in which object detector 11 is mounted on a vehicle that is one example of mobile unit 10, but object detector 11 is not limited to being mounted on a vehicle. The following description provides an example in which object detector 11 is a neural network-type object detection device that is one example of the neural network-type recognition device.

As illustrated in FIG. 1, information processing system 1 includes mobile unit 10 and relearning processing device 30.

Mobile unit 10 is, for example, a vehicle. The vehicle may, for example, be a self-driving vehicle that controls its operation without necessitating any driver's operation, or may be a vehicle capable of running while switching the mode between automatic operation and manual operation.

Mobile unit 10 includes object detector 11 and communicator 12. Mobile unit 10 further includes a plurality of sensors including an optical sensor such as a camera (not shown) that generates an image by capturing the surroundings of mobile unit 10. Object detector 11 detects objects around mobile unit 10 on the basis of information acquired from the sensors such as the optical sensor. The following description provides the case in which a camera serves as the optical sensor and object detector 11 acquires an image from the camera, and objects around mobile unit 10 are detected on the basis of the image captured by the camera. Note that the image is one example of the sensing data.

Object detector 11 detects objects on the basis of input sensor data such as an image. Object detector 11 is an information processor that controls processing performed on an object detection model (trained model). The object detection model is a neural network-type mathematical model (detector) having a plurality of layers and includes a mathematical model for performing object detection processing.

Basically, the object detection model has a plurality of processing layers including an input layer, an intermediate layer, and an output layer. The input layer receives input of data targeted for object detection processing as input data (input information). Then, the output layer outputs data resulting from the object detection processing as output data (output information). The input layer and the output layer are different processing layers, and a processing layer between the input and output layers is referred to as an intermediate layer. The object detection model may have a plurality of intermediate layers. The object detection model is one example of the first recognition model trained through machine learning.

For example, an object detection model trained using training data is installed in object detector 11. In the present embodiment, object detector 11 has installed therein an object detection model (detector) that is trained so as to be capable of detecting two detection classes (object classes), namely "vehicle" and "person", on the basis of the image serving as the input data. The object detection model installed in object detector 11 is also referred to as a first object detection model, a first object recognition model, or a first object recognizer.

Object detector 11 also generates log information that is transmitted to relearning processing device 30, on the basis of information such as an image that includes target objects to be detected and results of detecting the target objects. The log information includes the image including target objects and the result of detection by object detector 11.

Here, log information 100 generated by object detector 11 of mobile unit 10 will be described with reference to FIG. 2. FIG. 2 shows one example of log information 100 that is output from mobile unit 10 according to the present embodiment. Relearning processing device 30 acquires log information 100 illustrated in FIG. 2 from mobile unit 10.

As illustrated in FIG. 2, log information 100 includes, for example, a scene image and a detection result.

The scene image (hereinafter, also simply referred to as the image) is image 101 that is captured by the camera of mobile unit 10 and for which object detection processing is executed. Image 101 may be associated with a region that corresponds to the detection result (a region in which detection targets are located). In the example illustrated in FIG. 2, a region in which target object 110 (one example of the recognition target) is present is referred to as object region 101a.

The detection result is information that indicates, for example, the result of detection performed on image 101 by object detector 11. Specifically, the detection result includes information indicating object classes and object region 101a detected by object detector 11. In the example illustrated in FIG. 2, a case is shown in which the result of detection performed on target object 110, i.e., a "vehicle", by object detector 11 is "person". That is, log information 100 illustrated in FIG. 2 is log information for the case where object detector 11 has made misdetection. Although object region 101a is illustrated as having a rectangular shape, the shape of object region 101a is merely one example, and object region 101a may have any shape other than a rectangle. Note that the detection result obtained from object detector 11 is one example of a first recognition result.

Log information 100 may further include, for example, image-capturing-device information for identifying the camera used to capture image 101, time information that indicates the time when image 101 has been captured, and image-capturing-position information that indicates the position and orientation in which image 101 has been captured.

Although an example in which object detector 11 includes a detector that detects objects (object detector) is described above, object detector 11 may include a classifier or a segmentation device (object detection model trained so as to be capable of executing an image segmentation).

Referring back to FIG. 1, communicator 12 provides communication between mobile unit 10 and relearning processing device 30. For example, communicator 12 is realized by a communication circuit (communication module). Communicator 12 functions as a log transfer device that transfers log information 100 generated by object detector 11 to relearning processing device 30 via network 20. There are no particular limitations on the timing of transmission of log information 100 from communicator 12. Log information 100 may be transmitted in succession, or may be transmitted at regular time intervals.

Note that mobile unit 10 may include a storage (storage device) that stores log information 100.

Network 20 is a wide area network (WAN) such as the Internet. Mobile unit 10 and relearning processing device 30 are connected to each other via network 20 (specifically, via a relay device (not shown) provided at the end of network 20) so as to be capable of wireless communication.

Relearning processing device 30 is an information processing device (server device) that generates training data sets for use in relearning of the object detection model (trained model) for object detection. For example, relearning processing device 30 is operated by a manufacturer of the object detection model installed in object detector 11 of mobile unit 10, or by any other operator.

Relearning processing device 30 includes communicator 31, determiner 32, clipping unit 33, neural network (NN) recognition executor 34, class adder 35, and storage 36.

Communicator 31 provides communication between relearning processing device 30 and mobile unit 10. For example, communicator 31 is realized by a communication circuit (communication module). Communicator 31 functions as a log collector that receives log information 100 (see FIG. 2) from mobile unit 10 via network 20. Communicator 31 outputs the received log information to determiner 32. Note that communicator 31 is one example of a first acquirer.

Determiner 32 determines whether or not the detection result included in log information 100 is correct, on the basis of acquired log information 100. That is, determiner 32 determines correctness or incorrectness of the detection result obtained from object detector 11. Here, the determination as to correctness or incorrectness includes misdetection and undetection. In other words, determiner 32 determines whether or not the detection result obtained from object detector 11 is misdetected or undetected (one example of misdetection or undetection).

Determiner 32 may determine correctness or incorrectness by comparing the detection result obtained from object detector 11 with object rectangle information (including object classes and object regions) obtained as a result of the user manually annotating image 101 included in log information 100. In this case, relearning processing device 30 may include a receiver (not shown) that accepts input from the user. Determiner 32 may also acquire the aforementioned object rectangle via communicator 31. Note that the object rectangle including object classes and object regions described above is one example of the reference data.

Determiner 32 may also determine correctness or incorrectness by comparing the detection result obtained from object detector 11 with a result of detection performed on image 101 by an object detector that has higher detection performance than object detector 11 (hereinafter, also referred to as a high-performance object detector). In this case, relearning processing device 30 may include the high-performance object detector, or may acquire the detection result from such an object detector via communicator 31.

The high-performance object detector has higher arithmetic performance than object detector 11 and includes an object detection model capable of more accurately detecting objects. For example, such an object detection model is realized by an object detection model that is trained so as to become capable of image segmentation (semantic segmentation), or by an object detection model that includes object classes detectable by object detector 11 (in the present embodiment, "vehicle" and "person") and that is trained so as to be capable of detecting a larger number of object classes than the object classes detectable by object detector 11. Note that such an object detection model may be a model that does not care about at least one of an increase in arithmetic scale and a lack of realtimeness.

Clipping unit 33 generates a clipped image including target object 110 from image 101 in accordance with the result of determination by determiner 32. Specifically, clipping unit 33 performs processing for clipping target object 110 determined as being incorrect in the result of detection by determiner 32 from image 101.

NN recognition executor 34 executes recognition processing for acquiring features of a misdetected or undetected object on the clipped image. NN recognition executor 34 is an information processor that controls a second object recognition model (which is also referred to as a second object recognizer and is a trained model such as an object detection model). For example, the second object recognition model is a neural network recognizer for feature extraction (e.g., a recognizer that performs forward processing once), and NN recognition executor 34 causes this recognizer to perform processing. In the present embodiment, an example is described in which the neural network recognizer for feature extraction is an object classifier (hereinafter, also referred to as a classifier), but the recognizer may be a neural network having other recognition functions. NN recognition executor 34 outputs a classification result obtained by inputting the clipped image to the object classifier. The classification result includes, for example, probability values and candidate classes for objects as illustrated in FIG. 7, which will be described later. Note that the classes for use in the classification by the object classifier include, for example, two or more classes. The second object recognition model included in NN recognition executor 34 has higher recognition performance (at least classification performance) than the first object recognition model.

Class adder 35 adds a new class for object detector 11 on the basis of classification results output from NN recognition executor 34. Specifically, class adder 35 groups classification results and accumulates the grouped classification results in storage 36. Then, when a predetermined number or more of images including target objects are accumulated in one group, class adder 35 generates annotated relearning training data for adding a new detection class to the detection classes of object detector 11. The relearning training data may be data for use as input data for retraining the first object detection model, or may be test data for verifying the detection performance of the first object detection model that has undergone relearning.

Storage 36 stores classification results grouped by class adder 35. Storage 36 may also store information such as images generated by each processor and detection results. Storage 36 may also store log information 100 acquired by communicator 31. Storage 36 may further store programs or the like that are executed by each processor of relearning processing device 30. For example, storage 36 is realized by a storage device such as a semiconductor memory.

As described above, relearning processing device 30 includes, for example, determiner 32 that determines whether object detector 11 has made misdetection or undetection, and class adder 35 that groups misdetected or undetected images on the basis of classification results obtained from NN recognition executor 34 and, when the number of images included in one group reaches or exceeds a predetermined number, executes the processing for adding a detection class to the detection classes of object detector 11.

### [2. Operations of Relearning Processing Device]

Next, operations of relearning processing device 30 and images to be generated will be described with reference to FIGS. 3 to 13. FIG. 3 is a flowchart of operations of relearning processing device 30 according to the present embodiment.

As illustrated in FIG. 3, first, relearning processing device 30 acquires log information 100 from mobile unit 10 (S10). Specifically, communicator 31 receives log information 100 from mobile unit 10. Log information 100 is information transferred from communicator 12 to relearning processing device 30 via network 20 and including at least images and detection results. Then, communicator 31 outputs received log information 100 to determiner 32. Note that only images and detection results out of various types of data included in log information 100 may be output to determiner 32. Step S10 is one example of acquiring the first recognition result.

Next, determiner 32 acquires annotation data for image 101 included in log information 100 (S20). For example, determiner 32 accepts a user's annotation operation or acquires detection results from the high-performance object detector to acquire annotation data. The annotation data is one example of the reference data, and step S20 is one example of acquiring the reference data. In this way, determiner 32 also functions as a second acquirer that acquires the annotation data.

Determiner 32 determines whether detection results included in log information 100 are correct or incorrect. For example, determiner 32 determines whether detection results include misdetection or undetection (S30). Determiner 32 determines correctness or incorrectness by, for example, comparing the detection result obtained from object detector 11 (detection result included in log information 100) with an object rectangle (object class and object region) obtained as a result of the user manually annotating image 101 or the detection result obtained from the high-performance object detector, i.e., annotation data. Step S30 is one example of determining a difference in class of the recognition target. The difference refers to the difference between the annotation data and the detection result obtained from object detector 11.

One example of the technique for determining correctness or incorrectness in object detection is an evaluation technique using Intersection over Union (IoU). One example in which correctness or incorrectness is determined by determiner 32 will be described with reference to FIGS. 4A and 4B. FIG. 4A shows one example of determination information 200 about misdetection according to the present embodiment. FIG. 4B shows one example of determination information 300 about undetection according to the present embodiment. Note that "Correct result" in FIGS. 4A and 4B indicates the object rectangle obtained as a result of the user performing manual annotation, or the detection results obtained from the high-performance object detector. FIG. 4A is an illustration of determination information 200 for log information 100 illustrated in FIG. 2.

As illustrated in FIG. 4A, object detector 11 detects target object 110 in image 101 as "person" in spite of the fact that target objet 110 is supposed to be detected as "vehicle". Thus, the IoU score of "person" becomes 0, and the IoU score of "vehicle" becomes greater than or equal to 0. Thus, determiner 32 determines this detection as "misdetection 1". That is, "misdetection 1" refers to misdetection in which target object 110 is detected as a detection class that is targeted for detection by object detector 11 and that is different from the detection class corresponding to target object 110.

As illustrated in FIG. 4B, object detector 11 has failed to detect target object 320 in image 301 in spite of the fact that target object 320 is supposed to be detected as "person". Object detector 11 detects only target object 310 located in object region 301a, out of target object 310 located in object region 301a and target object 320 located in object region 301b. Thus, the IoU scores of "person" and "vehicle" both become "0", and accordingly determiner 32 determines this detection as "undetection".

Even in the case where the IoU scores of "person" and "vehicle" are both "0", if the detection result includes an object region (detected rectangle) of either "person" or "vehicle", the background is misdetected as a detected object. Thus, determiner 32 determines this detection as "misdetection 2". "Misdetection 2" refers to misdetection in which object detector 11 has detected objects other than "vehicle" and "person" (i.e., objects that originally should not have to be detected) as either "vehicle" or "person".

Note that the technique for determining whether the detection is misdetection or undetection is not limited to the technique using the IoU scores, and any other conventional technique may be used.

Referring back to FIG. 3, when it has been determined that the detection result includes misdetection or undetection (Yes in S30), determiner 32 accumulate annotation data (e.g., information indicated by "Correct result") that is paired with misdetection or undetection results (S40). Specifically, for example, determiner 32 may generate and accumulates determination information obtained by adding "Correct result" and "Determination result" to log information 100. Then, determiner 32 outputs the generated determination information to clipping unit 33. Note that determiner 32 may also store the generated determination information in storage 36. Here, the determination result of Yes in step S30 is one example of the case where the difference satisfies a predetermined condition. The predetermined condition includes a requirement that the detection result includes misdetection or undetection.

In this way, the determination information includes, in addition to log information 100, the annotation data that is paired with misdetection or undetection results (see FIGS. 4A and 4B).

When it has been determined that the detection result includes neither misdetection nor undetection (No in S30), determiner 32 returns to step S10 and continues the processing.

Next, clipping unit 33 clips the misdetected or undetected object from the image on the basis of the determination information. Specifically, clipping unit 33 clips an image of the misdetected or undetected object on the basis of the rectangle (object region) indicated by the detection result or the annotation data to generate a clipped image (S50).

When the determination result obtained from determiner 32 is "misdetection 1", clipping unit 33 clips an image of the misdetected object on the basis of determination information 200, using the rectangle indicated by "Detection result" or "Correct result". In the case of image 101 (image 101 included in log information 100) illustrated in FIG. 5A, for example, clipped image 120 illustrated in FIG. 5B is generated based on the rectangle (object region 101a) indicated by the detection result. When the determination result obtained from determiner 32 is "misdetection 2", clipping unit 33 generates a clipped image on the basis of the rectangle indicated by "Detection result" included in the determination information.. Note that FIG. 5A is an illustration of the misdetected scene image (e.g., image 101). FIG. 5B is an illustration of clipped image 120 clipped from the misdetected scene image (e.g., image 101).

When the determination result obtained from determiner 32 is "undetection", clipping unit 33 clips an image of the undetected object on the basis of determination information 300, using the rectangle indicated by "Correct result" (rectangle indicated by the annotation data). In the case of image 301 (image 301 included in the log information) as illustrated in FIG. 6A, clipping unit 33 generates clipped image 330 on the basis of the rectangle (object region 301b) indicated by "Correct result". Note that FIG. 6A is an illustration of the undetected scene image (e.g., image 301). FIG. 6B is an illustration of clipped image 330 clipped from the undetected scene image (e.g., image 301).

At this time, clipping unit 33 does not clip an image of target object 310 that has been properly detected by object detector 11.

Then, clipping unit 33 outputs the generated clipped image to NN recognition executor 34.

Note that clipping unit 33 may clip an image, using for example a rectangle with a predetermined aspect ratio, i.e., a rectangle that contains the rectangle included in the determination information. The predetermined aspect ratio may, for example, form a rectangle with an aspect ratio suitable for NN recognition executor 34 (e.g., a neural network recognizer for feature extraction).

Note that relearning processing device 30 manages clipped image 120 by a configuration associated with determination information 200, and manages clipped image 330 by a configuration associated with determination information 300. For example, relearning processing device 30 associates clipped image 120 with determination information 200 and stores the associated information in storage 36, and associates clipped image 330 with determination information 300 and stores the associated information in storage 36.

Referring again back to FIG. 3, NN recognition executor 34 executes processing for recognizing the clipped image (S60). In the present embodiment, NN recognition executor 34 executes class classification processing using a neural network recognizer for feature extraction (one example of the second recognition model) on the clipped image. Inputting the clipped image to NN recognition executor 34 is one example of inputting the sensing data to the second recognition model. That is, the sensing data that is input to the second recognition model may be the sensing data itself or may be part of the sensing data.

FIG. 7 is an illustration of classification result 400 obtained by NN recognition executor 34 according to the present embodiment. Classification result 400 illustrated in FIG. 7 indicates, for example, the result of the class classification processing (one example of the recognition processing) performed on clipped image 330. Classification result 400 includes probability values and candidate classes. In the case where NN recognition executor 34 includes a classifier, the number of probability values is equal to the number of classes that are generally used for the classification (e.g., 100 classes or more), and a total of all the probability values becomes one.

As illustrated in FIG. 7, the candidate class with the highest probability value in clipped image 330 is "person", and the candidate class with the second highest probability value is "tree". The probability value of "person" is "0.62", and the probability value of "tree" is "0.12". The probability values indicate, for example, output values such as likelihood that are the probabilities of occurrence of events or hypothetical probabilities based on observation data. Classification result 400 is one example of the second recognition result. Classification result 400 includes one or more candidates (e.g., "person" or "tree") for the class to be detected by NN recognition executor 34.

NN recognition executor 34 outputs classification result 400 to class adder 35.

Referring again back to FIG. 3, class adder 35 executes processing for adding a detection class to object detector 11 on the basis of classification result 400 (S70). In other words, processing for generating an additional class for the object detection model of object detector 11 is executed in step S70. Step S70 is one example of generating an additional class for the first recognition model. The processing performed by class adder 35 will be described with reference to FIG. 8. FIG. 8 is a flowchart of the processing for adding a detection class, performed by class adder 35.

As illustrated in FIG. 8, class adder 35 groups and accumulates classification results 400 (S71). For example, class adder 35 groups classification results 400 and stores grouped classification results 400 in storage 36. Using classification results 400, class adder 35 groups classification results that include misdetected or undetected objects having similar features, and stores the grouped classification results in storage 36.

For example, class adder 35 may group classification results that include the same No. 1 object class, i.e., the same object class with the highest probability value ("person" in the example illustrated in FIG. 7) among a plurality of classification results 400, as being in the same group. Alternatively, for example, class adder 35 may group classification results that include the same or similar candidate class among a plurality of classification results 400, as being in the same group. For example, class adder 35 may group classification results 400 that include the same or similar candidate classes having probability values higher than or equal to a predetermined value (e.g., 0.3 or higher) among a plurality of classification results 400, as being in the same group.

In this way, class adder 35 may group classification results 400 that include at least part of one or more candidate classes is the same or similar among a plurality of classification results 400, as being in the same group.

Note that "similarity in candidate classes" may mean that a predetermined ratio (e.g., 60%) of candidate classes or a predetermined number (e.g., three) of candidate classes among candidate classes that have probability values greater than or equal to a predetermined value match between classification results. For example, when two classification results 400 each include five candidate classes that have probability values greater than or equal to a predetermined value, two classification results 400 may be determined as having similarity in candidate classes if their three of the five candidate classes match between two classification results 400.

Alternatively, in the case where a category structure of object classes is determined in advance, "similarity of candidate classes" may mean that at least some candidate classes include object classes that belong to a similar category. FIG. 9 shows one example of the category structure for object detection. The category structure illustrated in FIG. 9 is one example of a case where the most significant category is "Vehicle". For example, the category structure illustrated in FIG. 9 is stored in advance in storage 36.

As illustrated in FIG. 9, lower-order categories of "Vehicle" include "Passenger car", "Truck", and "Bus". In other words, "Passenger car", "Truck", and "Bus" have a common higher-order category ("Vehicle"). Assuming that "Passenger car", "Truck", and "Bus" are included in the same category in this way, for example when candidate classes included in two classification results 400 include object classes that belong to the same category, class adder 35 may determine that two classification results 400 are similar in candidate classes. The same applies to lower-order categories of "Passenger car", namely "Saloon" and "SUV".

Alternatively, for example, class adder 35 may group classification results 400 that include candidate classes of the same or similar order among a plurality of classification results 400, as being in the same group. For example, class adder 35 may group classification results 400 that include candidate classes of the same or similar order and having probability values greater than or equal to a predetermined value (e.g., 0.3 or more) among a plurality of classification results 400, as being in the same group.

Note that "similarity in the order of candidate classes" may mean that a predetermined ratio (e.g., 60%) of candidate classes or a predetermined number (e.g., three) of candidate classes among candidate classes that have probability values greater than or equal to a predetermined value match in order between classification results. For example, when two classification results 400 each include five candidate class that have probability values greater than or equal to a predetermined value, two classification results 400 may be determined as having similarity in the order of candidate classes if their three of the five candidate classes match in order between two classification results 400. Note that the order of candidate classes refers to the order of candidate classes arranged in decreasing order of probability value in the candidate list as illustrated in FIG. 7.

Alternatively, for example, class adder 35 may group classification results 40 that are the same or similar in probability distribution (e.g., reliability distribution) among a plurality of classification results 400, as being in the same group. Specifically, class adder 35 may group classification results 400 that are similar in the order of candidate classes and in the probability distribution of candidate classes among a plurality of classification results 400, as being in the same group. For example, class adder 35 may group classification results 400 that are similar in in the order of candidate classes and in the probability distribution of candidate classes (e.g., likelihood distribution), the candidate classes having probability values greater than or equal to a predetermined value (e.g., 0.3 or more), among a plurality of classification results 400, as being in the same group.

In this way, class adder 35 may group classification results 400 that are the same or similar in the probability distribution of one or more candidates classes among a plurality of classification results 400, as being in the same group.

Alternatively, class adder 35 dynamically changes the degree of "similarity" used as a reference in the above-described grouping, in order to maximize classification results that belong to the same group. As another alternative, class adder 35 may automatically change the grouping by a cluster analysis algorithm. As indicators of the grouping, reaction results in an arbitrary layer (e.g., signal results in the intermediate layer, and one example of the intermediate product) during neural network recognition may be used. The arbitrary layer may, for example, be a layer that reacts to the shapes of objects to be detected (e.g., "person" and "vehicle"), or may be a layer that reacts to any other feature quantity. Note that the reaction results are one example of the second recognition result.

Alternatively, a pair of candidate classes that have probability values different from each other by a predetermined value or more within the range of similarity may be added as an indicator of the grouping. Images that are similar in probability value may have similar appearances, but the use of probability values that are different from each other by a predetermined value or more helps increasing variations of appearances in the grouping and improves generalization performance.

Alternatively, a histogram that divides probability values by a constant value may be constructed, and grouping may be performed assuming that the histogram displays the probabilities of occurrence of misdetections. For example, a histogram is created by grouping probability values into four ranges, from 0 to 0.25, from 0.25 to 0.5, from 0.5 to 0.75, and from 0.75 to 1. These ranges have frequencies of, for example, 5, 10, 15, and 10, respectively. In this case, data is sampled at a ratio of 1:2:3:2 from the bins of the histogram and grouped. This enables grouping in accordance with the distribution of actual misdetections.

Alternatively, data having a probability value with a low frequency of occurrence may be grouped into one group so that the data having a probability value with a low frequency of occurrence is preferentially learned. At this time, augmentation or other procedures may be conducted in order to increase the number of data. This enables grouping that is specialized in rare scenes.

Class adder 35 may associate classification results 400 with relearning training data and group the associated data, the relearning training data corresponding to classification results 400 and including images (e.g., scene images included in log information 100) that include clipped images corresponding to classification results 400. That is, images are accumulated in each group. For example, the relearning training data may be generated by class adder 35.

Here, the relearning training data will be described with reference to FIGS. 10A and 10B. FIG. 10A is an illustration of relearning training data 500 that corresponds to a misdetected scene image (e.g., image 101). FIG. 10B is an illustration of relearning training data 600 that corresponds to an undetected scene image (e.g., image 301).

Relearning training data 500 illustrated in FIG. 10A is data that corresponds to determination information 200 illustrated in FIG. 4A. As illustrated in FIG. 10A, relearning training data 500 includes a scene image (e.g., image 101) and annotation data. The annotation data is information that corresponds to "Correct result" illustrated in FIG. 4A.

Relearning training data 600 illustrated in FIG. 10B is data that corresponds to determination information 300 illustrated in FIG. 4B. As illustrated in FIG. 10B, relearning training data 600 includes a scene image (e.g., image 301) and annotation data. The annotation data is information that corresponds to "Correct result" illustrated in FIG. 4B.

Referring again back to FIG. 8, next, class adder 35 determines whether or not the number of data accumulated in one group exceeds a predetermined number (S72). Class adder 35 determines whether or not the number of classification results 400 accumulated in one group, i.e., the number of images accumulated in one group, exceeds the predetermined number. The predetermined number may, for example, be 1000, but is not limited to this value. When the number of images accumulated in one group exceeds the predetermined number (Yes in S72), class adder 35 generates relearning training data for the case of adding a new detection class (S73). Specifically, class adder 35 generates annotated relearning training data.

The relearning training data generated in step S73 will be described with reference to FIGS. 11A and 11B. FIG. 11A shows one example of relearning training data with modified annotation data. FIG. 11B shows another example of relearning training data with modified annotation data. Relearning training data 700 illustrated in FIG. 11A is data corresponding to relearning training data 500 illustrated in FIG. 10A. Relearning training data 800 illustrated in FIG. 11B is data corresponding to relearning training data 600 illustrated in FIG. 10B.

As illustrated in FIGS. 11A and 11B, the annotation data in each relearning training data illustrated in FIGS. 10A and 10B is modified. Specifically, relearning training data 700 includes annotation data modified from "vehicle" to "vehicle 2". Relearning training data 800 includes annotation data modified from "person" to "person 2". The modified annotation data indicates a detection class to be added (additional class).

Note that a detection class to be added is named mechanically. In the present embodiment, detection classes to be added are named as "vehicle 2" and "person 2". In the case where detection classes to be added are new detection classes that are grouped with reference to the fact that classification results 400 are the same or similar in the order of candidate classes or in the probability distribution (e.g., likelihood distribution) of candidate classes, there is a high possibility that "vehicle 2" is regarded as a "vehicle that is alike to a person" and "person 2" is regarded as a "person who is not easy to detect" in human senses. Whether to handle these detection classes, namely "vehicle 2" and "person 2", in the same way as the originally existing detection classes, namely "vehicle" and "person", or whether to handle these detection classes in different ways is left to subsequent processing for damping mobile unit 10 equipped with object detector 11b.

Referring back to FIG. 8, next, class adder 35 performs processing for adding a new detection class for object detector 11 (S74). In the case where relearning processing device 30 includes the same object detection model (hereinafter, also referred to as a third object detection model) as the first object detection model of object detector 11, class adder 35 may perform processing for adding a new detection class to the third object detection model, or may perform processing for adding a new detection class to the first object detection model of object detector 11. The following description provides an example in which class adder 35 adds a new detection class to the third object detection model.

For example, class adder 35 may modify a neural network (change the configuration of a neural network) for the third object detection model to increase the number of detection classes as illustrated in FIG. 12. FIG. 12 shows one example illustrating how a detection class is added. In FIG. 12, a case is described in which four detection classes are originally present.

In FIG. 12, (a) indicates the intermediate layer and the output layer before addition of a detection class, and (b) indicates the intermediate layer and the output layer after addition of a detection class. As illustrated in (a) and (b) in FIG. 12, class adder 35 increases the number of detection classes by one from the original four to five.

Alternatively, for example, class adder 35 may prepare in advance a spare detection class for the third object detection model in the neural network and cause the third object detection model to make the spare detection class available in the next retraining processing, as illustrated in FIG. 13, in order to add a detection class. FIG. 13 shows another example illustrating how a detection class is added. In FIG. 13, a case is described in which five detection classes are originally present, but only four of the five detection classes are used.

In FIG. 13, (a) indicates the intermediate layer and the output layer before addition of a detection class, and (b) indicates the intermediate layer and the output layer after addition of a detection class. As illustrated in (a) and (b) in FIG. 13, the object detection model originally includes five detection classes, but is trained to regard one of the five detection classes (an unused detection class illustrated in (a) in FIG. 13) ineffective. Then, the number of detection classes is increased by making the unused detection class effective (available) as illustrated in (b) in FIG. 13. In other words, in the example illustrated in FIG. 13, relearning is performed so as to make the unused detection class effective in order to increase the number of detection classes. This processing is also included in the processing for adding a detection class.

The addition of a detection class may involve changing parameters of the object detection model (setting items for each layer). For example, the addition of a detection class may be equivalent to changing an anchor box to an anchor box that corresponds to a detection class applied to an undetection class. Specifically, the addition of a detection class may involve changing setting items for a layer that corresponds to (reacts to) a rectangle to be detected in accordance with a detection class applied to an undetection class.

If an unused detection class is prepared in advance in the neural network as illustrated in (a) in FIG. 13, it is possible to add a detection class even in the case (e.g., in the case of automobiles) where the neural network cannot be modified afterword to add a detection class because of requirements for safety. If an unused detection class is prepared in advance in the neural network as illustrated in (a) in FIG. 13, it is possible to add a detection class without changing the configuration of the neural network (without changing the scale of the neural network).

As described above, "vehicle 2" or "person 2" is assigned to the added detection class. Although there are some cases in which the network configuration of the intermediate layer may be modified by adding a detection class, such modifications shall be omitted in FIGS. 12 and 13.

In the example illustrated in FIG. 11A (example of misdetection 1), a detection class "vehicle 2" is further added to the detection classes "vehicle" and "person". In the example illustrated in FIG. 11B (example of undetection), a detection class "person 2" is further added to the detection classes "vehicle" and "person". For example, in the case where a target object that originally does not have to be detected has been detected (e.g., a case in which an object other than "vehicle" and "person" has been detected, and the detection corresponds to misdetection 2), a detection class "object that is not to be detected" is further added.

In this way, a detection class to be added is generated based on the tendency of a plurality of grouped classification results 400. For example, a detection class to be added may be generated based on at least part of one or more candidates classes, the probability distribution of one or more candidates classes, or the intermediate product.

When the number of images accumulated in one group is less than or equal to the predetermined value (No in S72), class adder 35 returns to step S71 and continues the processing subsequent to step S71.

Referring again back to FIG. 3, class adder 35 outputs the relearning training data generated in step S73 and for use in retraining processing in the case of adding a new detection (S80). Class adder 35 outputs a predetermined number or more of relearning training data (training data sets). In the present embodiment, class adder 35 outputs the relearning training data to the third object detection model included in relearning processing device 30 (the third object detection model with a detection class added in step S74). That is, class adder 35 executes relearning (additional learning) processing by inputting the relearning training data to the third object detection model (S90). That is, relearning of the neural network is executed. Step S80 is one example of outputting training data for an added detection class (one example of the additional class).

Thus, for example in the example of relearning training data 700 illustrated in FIG. 11A, the third object detection model is allowed to detect target object 110 that is originally supposed to be detected as "vehicle", as "vehicle 2" that is the added detection class. In other words, the third object detection model that has undergone the relearning processing is less likely to mistakenly detect target object 110 as "person". That is, the detection accuracy of the third object detection model is improved.

In the example of relearning training data 800 illustrated in FIG. 11B, the third object detection model is allowed to, for example, detect target object 320 that originally has to be detected, as "person 2" that is the added detection class. In other words, the third object detection model that has undergone the relearning processing is less likely to fail to detect target object 320. That is, the detection accuracy of the third object detection model is improved.

For example, in the case where a target object that originally does not have to be detected has been detected, object detector 11 detects this target object as an "object that is not to be detected". In other words, if the third object detection model that has undergone the relearning processing learns about objects that originally do not necessarily have to be detected, it is possible to reduce the possibility that such objects are misdetected as "vehicles" or "persons".

Next, class adder 35 executes evaluation processing for verifying the detection performance of the object detection model (e.g., third object detection model) that has undergone relearning (S100). Class adder 35 executes the evaluation processing, using test data for verifying the detection performance of the object detection model that has undergone relearning. Class adder 35 may determine to apply the object detection model that has undergone relearning if the detection accuracy of the object detection model after relearning is improved from the detection accuracy of the object detection model before relearning (object detection model before the addition of a detection class). That is, class adder 35 may determine to apply an object detection model with less occurrence of misdetection or undetection.

Alternatively, for example, class adder 35 may make evaluation as to whether or not an object detection model that used to detect a "vehicle" as a "person" as illustrated in FIG. 4A detects a "person" as a "vehicle". That is, class adder 35 may make evaluations as to whether or not the object detection model that has undergone relearning becomes likely to mistakenly detect a "person" as a "vehicle". For example, in the case where an object detection model that used to detect a "vehicle" as a "person" does not detect a "person" as a "vehicle, class adder 35 may determine to apply the object detection model that has undergone relearning because of its improvement in detection accuracy.

Relearning processing device 30 may transmit, for example, information about the third object detection model that has undergone the retraining processing in step S90, to mobile unit 10. In other words, mobile unit 10 may acquire an update program for updating the object detection model of object detector 11 from relearning processing device 30. Relearning processing device 30 may also output the training data sets used to add the generated detection class in step S74 to another server device, and the other server device may execute the processing in steps S74, S90, and S100.

The processing in step S74 may be processing for increasing the number of detection classes in the object detection model of object detector 11 of mobile unit 10. That is, class adder 35 may execute processing for adding a detection class to the object detection model of object detector 11 of mobile unit 10. Then, relearning processing device 30 may output the training data sets used in the retraining processing in the case of adding the detection class generated in step S73, to mobile unit 10 (S80), and mobile unit 10 may execute the retraining processing and the evaluation processing (S90 and S100).

### [Other Embodiments]

While the present disclosure has been described with reference to one embodiment, the present disclosure is not intended to be limited to the embodiment described above.

For example, although the above embodiment has described one example in which the mobile unit is an automobile (self-driving vehicle), the present disclosure is not limited thereto. The mobile unit may, for example, be an air vehicle (e.g., a drone), a marine vessel, or a robot (e.g., a free-running vacuum cleaner) that autonomously moves in accordance with captured images of the surroundings. The object detector (object detection device) is not limited to being included in a mobile unit. The present disclosure is applicable to various objects that include an object detector. For example, as illustrated in FIG. 14, the object may be portable terminal 10a such as a smartphone or a tablet. In this case, information processing system 1a includes portable terminal 10a and relearning processing device 30. Note that object detector 11a and communicator 12a included in portable terminal 10a are the same as object detector 11 and communicator 12 according to the embodiment, and a description thereof shall be omitted. The object may also be Internet of Things (IoT) equipment that includes an object detector. In this way, the relearning processing device according to the present disclosure is applicable not only in the field of autonomous vehicles, but also in the fields of different produces such as robots, drones, portable terminals, and IoT equipment.

Although the above embodiment has described one example in which the NN recognition executor performs the recognition processing on the clipped image in step S60, the present disclosure is not limited thereto. The NN recognition executor may use a scene image (image before clipping) as an input and execute recognition processing on that scene image. For example, the NN recognition executor may use, as an input, information about a scene image and a predetermined region (e.g., a rectangular region) of the scene image on which the recognition processing is performed, and may execute the recognition processing on only the predetermined region of the scene image. In this case, the processing in step S50 illustrated in FIG. 3 does not necessarily have to be executed.

Although the above embodiment has described one example in which the relearning processing device acquires the log information including the results of detection by the object detector from the mobile unit, the present disclosure is not limited thereto. In the case where the relearning processing device includes the same object detection model as that of the object detector of the mobile unit, the relearning processing device may acquire only an image out of the image and detection results from a mobile unit and acquire an output (detection result) obtained as a result of inputting the acquired image to the object detection model of the relearning processing device as a detection result of the object detector of the mobile unit.

Although the above embodiment has described one example in which, when the determination result in step S30 illustrated in FIG. 3 is Yes, the relearning processing device executes the recognition processing (S60) and the grouping processing (S71), the present disclosure is not limited to this example. The relearning processing device does not necessarily have to execute the recognition processing and the grouping processing. When the determination result in step S30 is Yes, i.e., when there is a difference, the relearning processing device may generate a detection class to be added (one example of an additional class) on the basis of this difference. For example, the relearning processing device may generate a detection class to be added, directly from the difference. To describe this using FIG. 4A as an example, the relearning processing device may generate "vehicle 2" (vehicle that is alike to a person) as a detection class to be added, on the basis of the difference between "Detection result" and "Correct result".

Although the above embodiment has described one example in which one detection class is added in step S74, two or more detection classes may be added.

The class adder according to the embodiment described above may perform predetermined processing on the scene image included in the log information to generate training data for relearning. For example, the class adder may perform processing for increasing (padding) the number of relearning training data. The class adder may increase the number of relearning training data by superimposing or substituting the clipped image clipped by the clipping unit on or for another image that includes an object whose object class is the same as the object class (e.g., "vehicle") of an object in the clipped image. In this way, the number of relearning training data may be increased based on the misdetected or undetected object itself (the object in the clipped image). This facilitates the generation of effective relearning training data for the object. The image generated by such superimposition or substitution is one example of the processed data obtained by processing the sensing data. Note that the method of processing is not limited to the method described above.

The order of a plurality of processes described in the above embodiment is merely one example. The order of a plurality of processes may be changed, or a plurality of processes may be executed in parallel. Alternatively, some of a plurality of processes may not be executed.

Each constituent element described in the embodiment may be implemented as software, or may be implemented typically as LSI serving as an integrated circuit. Individual constituent elements may be formed respectively into single chips, or some or all of the constituent elements may be formed into a single chip. Although LSI is described here as an example, it may also be referred to as IC, system LSI, super LSI, or ultra LSI depending on the degree of integration. The method of circuit integration is not limited to LSI, and may be implemented by a dedicated circuit or a general-purpose processor. A field programmable gate array (FPGA) that enables programming after the manufacture of LSI, or a reconfigurable processor capable of reconfiguring connections or settings of circuit cells inside LSI may be used. Moreover, if other circuit integration techniques that replace LSI make their debuts with the advance of semiconductor technology or with derivation from other technology, such techniques may be used to integrate the constituent elements into an integrated circuit.

The way of division of functional blocks in the block diagrams is merely one example, and a plurality of functional blocks may be implemented as a single functional block, or one functional block may be divided into a plurality of functional blocks, or some functions may be transferred to a different functional block. The functions of a plurality of functional blocks having similar functions may be processed in parallel or in time sequence by single hardware or software.

The relearning processing device included in the information processing system may be implemented as a single device, or may be implemented as a plurality of devices. For example, each processor of the relearning processing device may be implemented as two or more server devices. In the case where the information processing system is implemented as a plurality of server devices, the constituent elements of the information processing system may be divided in any way into the plurality of server devices. There are no particular limitations on the method of communication among a plurality of server devices.

Moreover, the technique disclosed in the present disclosure may be the program described above, or may be a non-transitory computer-readable recording medium that records the program described above. It goes without saying that the program described above may be distributed via a transmission medium such as the Internet. For example, the program described above and digital signals formed by the program described above may be transmitted via an electric communication line, a wireless or wired communication line, a network typified by the Internet, or data broadcastings. The program described above and digital signals formed by the program described above may be implemented as another independent computer system by being recorded and transferred on a recording medium or by being transferred via a network or other systems.

### [Industrial Applicability]

The present disclosure is applicable to, for example, an information processing method that generates training data for relearning in the case where a detection class for a trained model is added.

### [Reference Signs List]

- 1, 1a: information processing system
- 10: mobile unit
- 10a: portable terminal
- 11, 11a: object detector
- 12, 12a: communicator
- 20: network
- 30: relearning processing device
- 31: communicator (first acquirer)
- 32: determiner
- 33: clipping unit
- 34: NN recognition executor
- 35: class adder
- 36: storage
- 100: log information
- 101, 301: image
- 101a, 301a, 301b: object region
- 110, 310, 320: target object
- 120, 330: clipped image
- 200, 300: determination information
- 400: classification result
- 500, 600, 700, 800: relearning training data

## Claims

1. An information processing method that is executed by a computer, the information processing method comprising:
acquiring a first recognition result that is output as a result of inputting sensing data to a first recognition model that is trained through machine learning;
acquiring reference data for the sensing data;
determining a difference in class of a recognition target between the first recognition result and the reference data;
when the difference satisfies a predetermined condition, generating an additional class for the first recognition model; and
outputting the sensing data or processed data obtained by processing the sensing data as training data for the additional class.

2. The information processing method according to claim 1, further comprising:
acquiring a second recognition result that is output as a result of inputting the sensing data to a second recognition model different from the first recognition model; and
generating the additional class in accordance with the second recognition result.

3. The information processing method according to claim 2,
wherein the second recognition result includes one or more candidates for the class of the recognition target, and
the additional class is generated based on the one or more candidates.

4. The information processing method according to claim 3, further comprising:
acquiring a plurality of second recognition results from a plurality of sensing data, each of the plurality of second recognition results being the second recognition result, and each of the plurality of sensing data being the sensing data; and
when at least part of the one or more candidates is the same or similar among the plurality of second recognition results, generating the additional class in accordance with the at least part of the one or more candidates.

5. The information processing method according to claim 3, further comprising:
acquiring a plurality of second recognition results from a plurality of sensing data, each of the plurality of second recognition results being the second recognition result, and each of the plurality of sensing data being the sensing data; and
when the one or more candidates are the same or similar in probability distribution among the plurality of second recognition results, generating the additional class in accordance with the probability distribution of the one or more candidates.

6. The information processing method according to claim 2,
wherein the second recognition result includes an intermediate product of the second recognition model, and
the additional class is generated based on the intermediate product.

7. The information processing method according to claim 1, further comprising:
generating the additional class in accordance with the difference.

8. The information processing method according to any one of claims 1 to 7,
wherein the first recognition model is a neural network model, and
the generating of the additional class includes modifying a network configuration or a parameter of the neural network model.

9. The information processing method according to any one of claims 1 to 8,
wherein the predetermined condition includes a condition that the first recognition result includes misdetection or undetection.

10. An information processing system, comprising:
a first acquirer that acquires a first recognition result that is output as a result of inputting sensing data to a first recognition model trained through machine learning;
a second acquirer that acquires reference data for the sensing data;
a determiner that determines a difference in class of a recognition target between the first recognition result and the reference data; and
a class adder that, when the difference satisfies a predetermined condition, generates an additional class for the first recognition model and outputs the sensing data or processed data obtained by processing the sensing data as training data for the additional class.
